# EUROPÄISCHE PATENTSCHRIFT

(11) **EP 1 776 205 B1**
(45) Veröffentlichungstag und Bekanntmachung des Hinweises auf die Patenterteilung: **16.03.2011**
(21) Anmeldenummer: 05770903.2
(22) Anmeldetag: 18.07.2005
(51) Int. Cl.: B23K 20/12

(54) **VERFAHREN ZUM REIBSCHWEISSEN VON BAUTEILEN**
METHOD FOR FRICTION WELDING COMPONENTS
PROCEDE DE SOUDAGE PAR FRICTION D'ELEMENTS CONSTITUTIFS

(30) Priorität: 16.07.2004 DE 102004034498
(43) Veröffentlichungstag der Anmeldung: 25.04.2007
(73) Patentinhaber: EJOT GmbH & Co. KG, 57334 Bad Laasphe (DE)
(72) Erfinder: MAUER, Dieter, 35457 Lollar (DE)
(74) Vertreter: Bardehle, Heinz
(86) Internationale Anmeldenummer: PCT/EP2005/007812
(87) Internationale Veröffentlichungsnummer: WO 2006/008123

(56) Entgegenhaltungen:
- WO-A-97/48518
- DE-A1- 19 902 357
- DE-U1- 29 922 424
- US-A1- 2004 060 966

## Beschreibung

Die Erfindung bezieht sich auf ein Verfahren zum Reibschweißen von Bauteilen, bei dem die beiden Bauteile während einer Erwärmungsphase unter, gegenseitiger, von einem Presskraftaktuator erzeugten axialen Presskraft an der zu verschweißenden Stelle bei Stillstand eines stationären Bauteils und Drehung des angetriebenen Bauteils relativ zueinander gedreht werden, bei dem ferner nach ausreichender Reibungserwärmung der Bauteile die Drehung abgebremst wird und die zueinander still stehenden Teile mit wesentlich erhöhter Presskraft als während der Erwärmungsphase zusammengepresst werden, wobei das gedrehte Bauteil von einem mit einer Steuerung versehenen Elektromotor angetrieben wird, dessen Drehzahl, Drehmoment, Presskraft und Vorschubtiefe von der Steuerung gemessen wird.

Ein derartiges Verfahren ist in der DE 199 02 357A1 beschrieben. Hierzu wird in der genannten Druckschrift in allgemeiner Form auf das vorstehend erläuterte Verfahren unter Hinweis auf eine Regelung für eine Reibschweißmaschine beschrieben, die während der Reibphase das Reibmoment oder die Reibleistung berücksichtigt. Darüber hinaus wird in der Beschreibung der Druckschrift in allgemeiner Form erwähnt, dass die Regelung mehrere Komponenten beinhaltet. Dies sind zum einen die Momenten- bzw. Leistungsaufnahme, ein Drehmomentenrechner oder Leistungsrechner, ein Reibmomentenregler, ein Vorschubregler oder Druckregler und ein Vorschubaufnehmer oder Druckaufnehmer. Von der Regelung wird die Vorschubsteuerung beaufschlagt. Bezüglich irgendwelcher Werte bzw. irgendwelcher gegenseitiger Abhängigkeiten wird in der Beschreibung nur erwähnt, dass ein Sollwert für das Reibmoment und/oder die Reibleistung konstant sein kann. Er kann aber auch als eine beliebig geeignete Funktion über der Reibzeit, dem Reibweg bzw. Reibwinkel oder dem Vorschubweg oder andere beliebig geeignete Parametern dargestellt werden. Dementsprechend wird der Vorschubantrieb von der Regelung zur Einstellung des gewünschten Reibmomentes und/oder der gewünschten Reibleistung gesteuert. Diese Angaben enthalten nur die Lehre, auf welche Komponenten bzw. Parameter der Reibschweißvorgang abgestellt werden kann, ohne dass damit angegeben wird, welche konkreten Feststellungen bzw. Messergebnisse der einzelnen Sensoren als maßgebend und in bestimmter Weise steuernd herangezogen werden können.

Hierauf aufbauend ist in der DE 299 22 424 U1 ein Verfahrensablauf offenbart, gemäß dem während des eigentlichen Reibprozesses die Drehzahl des gedrehten Bauteils ständig so verändert wird, dass hierdurch der Reibfaktor angehoben wird, womit durch die Anpassung seiner Größe eine optimale Energieausnutzung ermöglicht wird. Dabei kann die Drehzahl während des Reibprozesses je nach Werkstoffpaarung und Reibschweißapplikation entweder gesenkt oder auch angehoben werden.

Hier setzt die Erfindung an und gibt ein Verfahren mit den erforderlichen einzelnen Prozesswerten an, die konkret den Ablauf eines sicher und verlässlich arbeitenden Reibschweißverfahrens bestimmen. Diese Verfahrensmerkmale bestehen darin, dass die Drehzahl (n) in Abhängigkeit von einer axialen Anfangspresskraft (F) zwischen den beiden Bauteilen durch die Steuerung auf eine das Anschmelzen der Berührungsflächen der beiden Bauteile bewirkende Anfangsdrehzahl (n) eingestellt und bis zu einem infolge Schmelzens der Berührungsflächen der beiden Bauteile eintretenden Drehmomentabfall beibehalten wird, bei dem die Drehzahl verringert und bis zum Stillstand abgesenkt wird, wobei am Ende der Absenkung die Presskraft (F) bis zu einem Maximum so erhöht wird, dass an den Berührungsflächen der beiden Bauteile die feste Verschweißung erfolgt.

Mit diesen Verfahrensschritten wird zunächst durch die Steuerung eine in ihr gespeicherte Anfangsdrehzahl eingestellt, die von einer axialen Anfangspresskraft der beiden Bauteile abhängt. Mit dieser Anfangsdrehzahl und der axialen Anfangspresskraft entsteht dann die für das Reibschweißen erforderliche Reibung zwischen den beiden Bauteilen, bis die Berührungsflächen zu schmelzen beginnen, was zu einem deutlich merkbaren Drehmomentabfall führt, bei dessen Ermittlung von der Steuerung die Drehzahl verringert und bis zum Stillstand abgesenkt wird, wobei also die Messung des Drehmomentabfalls das Signal für die Drehzahlvemngerung ist. Wenn dann die Absenkung, die nicht schlagartig vor sich gehen kann, sich dem Stillstand nähert und diesen erreicht, so wird die axiale Presskraft bis zu einem festgelegten Maximum kurz vor oder bei Stillstand der Drehzahl erhöht, womit nunmehr an den Berührungsflächen der beiden Bauteile dieser erhöhter Druck wirksam wird und damit die endgültige feste Verschweißung herbeiführt.

Die Erfindung bezieht sich weiterhin auf eine Vorrichtung zur Durchführung des vorstehend erläuterten dass der Elektromotor von einer den Presskraftaktuator aufweisenden linearen Vorschubeinchtung getragen wird und mit einem Presskraftsensor versehen ist und die Verbindung von Elektromotor und Vorschubeinchtung mit einem Wegsensor versehen ist, wobei der Elektromotor, der Wegsensor, der Drehmomentsensor und der Presskraftsensor in einen die Steuerung enthaltenden Regelkreis eingeschaltet sind und mit ihren das Drehmoment (RF), die Drehzahl (n), die Wegstrecke (s) und die Presskraft (F) angebenden Messdaten die Steuerung (19) derart speisen, dass die Anfangsdrehzahl das Anschmelzen der Berührungsflächen der beiden Bauteile bewirkt und bis zu einem infolge Schmelzen der Berührungsflächen der beiden Bauteile beibehalten und durch den eintretenden Drehmomentabfall die Drehzahl verringert und unter Erhöhung der Presskraft (F) bis zum Stillstand abgesenkt wird.

Das erfindungsgemäße Verfahren und die erfindungsgemäße Vorrichtung lassen sich vorteilhaft dazu verwenden, Bolzen mit plattenförmigen Bauteilen zu verschweißen, wobei die Bolzen das angetriebene Bauteil und die plattenförmigen Bauteile das stationäre Teil bilden. In diesem Falle besitzt die

Vorrichtung eine Aufnahme für die Bolzen z.B. ein Spannfutter und ein Widerlager für die plattenförmigen Bauteile, das insbesondere mit einer ebenen Oberfläche versehen sein kann.

Dabei gestaltet man die Vorrichtung zweckmäßig so, dass das plattenförmige Bauteil durch einen Niederhalter gegen das Widerlager gedrückt und damit festgeklemmt wird, um damit das plattenförmige Bauteil in eine definierte Lage zu bringen, in der es dann durch den Niederhalter festgehalten wird. Weiterhin versieht man vorteilhaft die Vorrichtung mit einer Zuführeinrichtung für die Zuführung der Bolzen, um die Vorrichtung insbesondere in einer Serienfabrikation sinnvoll einsetzen zu können.

Für die Gestaltung der Vorrichtung verwendet man zweckmäßig einen C-förmig gestalteten Arm, der einerseits das Widerlager bildet und andererseits mit der Vorschubeinrichtung verbunden ist.

Für eine vorteilhafte Ausgestaltung der Vorrichtung kann man einen Presskraftaktuator vorsehen, der als Kniehebelgelenkverbindung ausgebildet ist, deren Gelenkhebel von einer Gewindestellstange bei motorisch angetriebener Drehung sich entweder annähem oder voneinander entfernen. Mit der Kniehebelgelenkverbindung lässt sich eine sehr genaue Verschiebung des angetriebenen Bauteils und auch eine hohe Presskraft erzeugen.

In den Figuren sind Ausführungsbeispiele der Erfindung dargestellt. Es zeigen:
- Fig. 1: die Vorrichtung zur Durchführung des erfindungsgemäßen Verfahrens, bezogen auf das Reibschweißen eines Bolzens an einer Platte;
- Fig. 2: einen teilweise Schnitt durch die Vorrichtung gemäß Fig.1;
- Fig. 3: ein Diagramm, das für das erfindungsgemäße Verfahren wesentlichen Parameter in Bezug auf die einzelnen Verfahrensschritte zeigt;
- Fig. 4a-e: die aufeinanderfolgenden Phasen einer Reibschweißverbindung;
- Fig. 5: die Reibschweißverbindung eines Bolzens mit einer Platte;
- Fig. 6: die Reibschweißverbindung eines Bolzens mit einer beschichteten Plat- te;
- Fig. 7: die Gestaltung des Presskraftaktuators durch eine Kniehebelgelenkver- bindung.

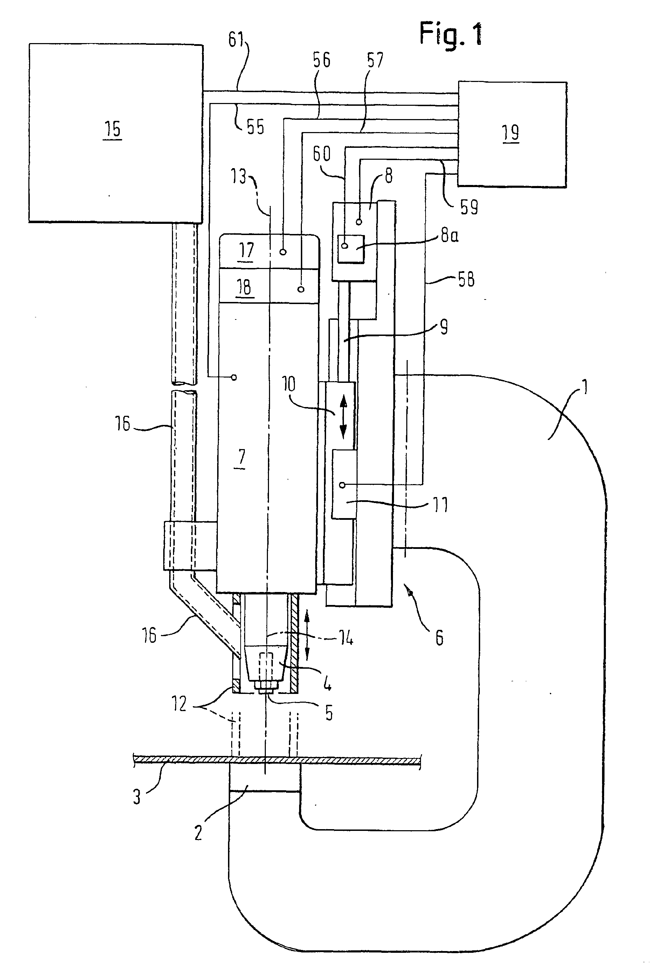

Bei der in der Figur 1 dargestellten Vorrichtung handelt es sich um eine Gestaltung, die für das Reibschweißen eines Bolzens 5 mit einer Platte 3 verwendet wird. Dabei handelt es sich nur um ein Ausführungsbeispiel einer solchen Vorrichtung, da das erfindungsgemäße Verfahren auch mit anderen Vorrichtungen durchgeführt werden kann, die gegebenenfalls in Bezug auf die zu verschweißenden Teile entsprechend anders zu gestalten sind. Im Prinzip handelt es sich dabei jedoch immer im wesentlichen um ähnliche bzw. die gleichen Grundbestandteile.

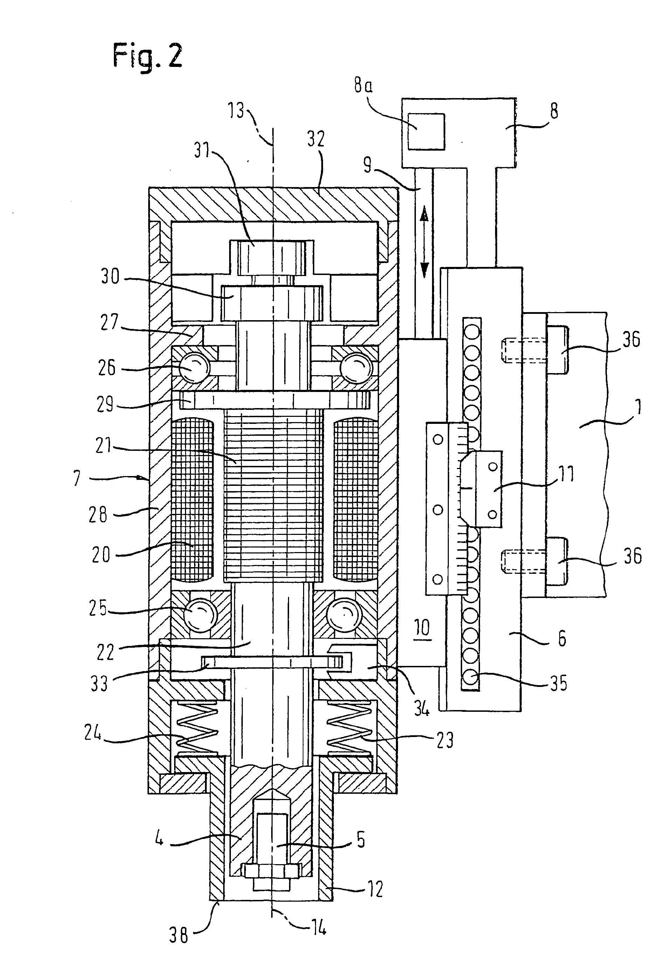

Die Vorrichtung weist den C-förmig gestalteten Arm 1 auf, der an seinem einen Ende das Widerlager 2 für die Platte 3 aufweist, an der ein von dem Spannfutter 4 gehaltener Bolzen 5 anzuschweißen ist. Das andere Ende des Armes C mündet in die Vorschubeinrichtung 6 ein, die den Elektromotor 7 trägt, der den Presskraftaktuator 8a enthält. Die Vorschubeinrichtung 6 ist demgemäss stationär in Bezug auf das Widerlager 2 angeordnet, da, wie gesagt, die Vorschubeinrichtung 6 und das Widerlager 2 starr über den Arm 1 miteinander verbunden sind. Die Vorschubeinrichtung 6 enthält den Vorschubantrieb 8, der über den Stößel 9 in das Schiebeteil 10 reicht und dieses gemäß dem Vorschubantrieb 8 linear in Richtung des Stößels 9 verstellt. Bei dieser Verstellung nimmt das Schiebeteil 10 den an ihm befestigten Elektromotor 7 linear mit, womit das Spannfutter 4 mit dem von ihm gehaltenen Bolzen 5 entsprechend linear bewegt wird. Um dabei die jeweilige Längenverschiebung des Elektromotors 7 mit dem Bolzen 5 gegenüber der Vorschubeinrichtung 6 anzuzeigen, ist der Wegsensor 11 an dem Schiebeteil 10 angebracht, der bei Linearverschiebung des Schiebeteils 10 gegenüber der Vorschubeinrichtung 6 verschoben wird und damit die Länge dieser Verschiebung als Vorschubtiefe angibt. Für die Verschiebung des Elektromotor 7 und damit des Spannfutters 4 ist der Vorschubantrieb 8 mit dem Presskraftaktuator 8a versehen, der einerseits die genannte Verschiebung hinsichtlich einer genau einzustellenden Länge und die dabei aufzuwendende Presskraft herbei führt. Auf diese Funktion des Presskraftaktuators 8a wird im Zusammenhang mit der Fig.2 näher eingegangen.

Das Spannfutter 4 ist von dem Niederhalter 12 umgeben, der bei Herabfahren des Elektromotors 7 mit dem Spannfutter 4 und einem eingespannten Bolzen 5 sich auf die Platte 3 zu bewegt und schließlich am Ende dieser Bewegung auf der Platte 3 aufsetzt, womit die Platte 3 gegenüber dem Elektromotor 7 mit dem Spannfutter 4 und dem eingespannten Bolzen 5 stabil arretiert ist. In dieser gestrichelt gezeichneten Position des Niederhalters 12 ist die Vorrichtung dann für den Reibschweißprozess vorbereitet.

Die gestrichelt gezeichnete Drehachse 13 des Elektromotors 7 fluchtet mit der strichpunktiert gezeichneten Achse 14 des Spannfutters 4 und geht damit in die Drehachse des Bolzen 5 über. Bei der in der Fig. 1 dargestellten Vorrichtung ist die Drehachse 13 des Elektromotors 7 starr mit dem Spannfutter 4 verbunden. Es sei jedoch noch darauf hingewiesen, dass insbesondere bei Verwendung von schnelldrehenden Elektromotoren zwischen die Drehachse 13 des Elektromotors 7 und das Spannfutter 4 ein schlupffreies Getriebe eingesetzt werden kann.

Um das Spannfutter 4 automatisch mit zu verarbeitenden Bolzen 5 beschicken zu können, ist der Zuführer 15 vorgesehen, der eine größere Anzahl von zu verarbeitenden Bolzen enthält, die dann aus dem Zuführer 15 über den flexiblen Zuführkanal 16 in das Spannfutter 4 eingeführt werden.

Der Elektromotor 7 ist weiterhin mit dem Kraftsensor 17 und dem Drehmomentsensor 18 versehen, auf deren Wirkungsweise im Zusammenhang mit der Beschreibung zu Figur 2 näher eingegangen wird. Elektromotor 7, Presskraftsensor 17, Drehmomentsensor 18, Wegsensor 11, Vorschubantrieb 8, Presskraftaktuator 8a und die Zuführeinrichtung 15 sind mit der Steuerung 19 über die Leitungen 55, 56, 57, 58, 59, 60 und 61 verbunden, auf deren Funktion ebenfalls im Zusammenhang mit der Figur 2 näher eingegangen wird.

In der Figur 2 ist der Elektromotor 7 mit den mit ihm zusammenhängenden Konstrukiionsteilen mehr ins Einzelne gehend dargestellt. Der Elektromotor 7 enthält die Staturwicklung 20 und den Rotor 21. Der Rotor 21 sitzt auf der Achse 22, die sich in das Spannfutter4 verlängert. Von dem Spannfutter 4 wird der Bolzen 5 erfasst. Das Spannfutter 4 ist von dem Niederhalter 12 umgeben, der durch die Federn 23 und 24 vorgedrückt wird und sich dabei auf eine in Figur 2 nicht dargestellte Platte drückt (siehe Figur 1, Platte 3). In der Figur 2 ist der Niederhalter 12 in voreilender Stellung dargestellt, aus der er bei Aufsetzen auf die Platte (siehe Figur 1) in eine Lage zurückgedrängt wird, in der er die Platte gegen das Widerlager 2 drückt, wobei das vordere Ende des Bolzens 5 mit dem Rand 38 des Niederhalters 12 fluchtet. Dabei sind die Federn 23 und 24 entsprechend zusammengedrückt und verspannen das Bauteil 3 gegen das Widerlager 2.

Die Achse 22 des Elektromotors 7 ist auf dem Kugellager 25 radial gelagert. Außerdem wird der Elektromotor 7 in Axialrichtung von dem Drucklager 26 abgestützt, das einerseits an einem Bund 27 des Gehäuses 28 anliegt und gegen einen Flansch 29 der Achse 22 drückt. An dem dem Spannfutter 43 abgewandten Ende der Achse 22 sind der Drehmomentsensor 30 und der Presskraftsensor 31 angeordnet, die in bekannter Weise die von ihnen zu ermittelten Werte (Drehmoment, Presskraft) abgeben und, wie in Figur 1 dargestellt, an die Steuerung 19 übertragen.

Das Gehäuse 28 ist benachbart zu dem Presskraftsensor 31 angeordnet und durch den Deckel 32 abgeschlossen. Auf der Achse 22 ist außerdem der Flansch 33 befestigt, der mit einer nicht dargestellten Verzahnung in den Drehzahlsensor 34 eingreift, das ein Signal die Drehzahl des Elektromotors 7 angibt.

Wie auch in Figur 1 dargestellt, ist seitlich an dem Gehäuse 28 des Elektromotors 7 das Schiebeteil 10 befestigt, das von der Vorschubeinrichtung 6 linear in axialer Richtung des Motors 7 bewegt wird. Das Schiebeteil 10 ist für diese Beweglichkeit auf den Längsrollen 35 gelagert. Seine Verschiebung wird von dem Wegsensor 11 gemessen und wird durch Betätigung des Vorschubantrieb 8 bewirkt, der über den Stößel 9 auf das Verschiebeteil 10 einwirkt. Mittels der Schrauben 36 ist die Vorschubeinrichtung 6 mit dem Vorschubantrieb 8 an dem betreffenden Ende des C-förmigen Armes 1 befestigt.

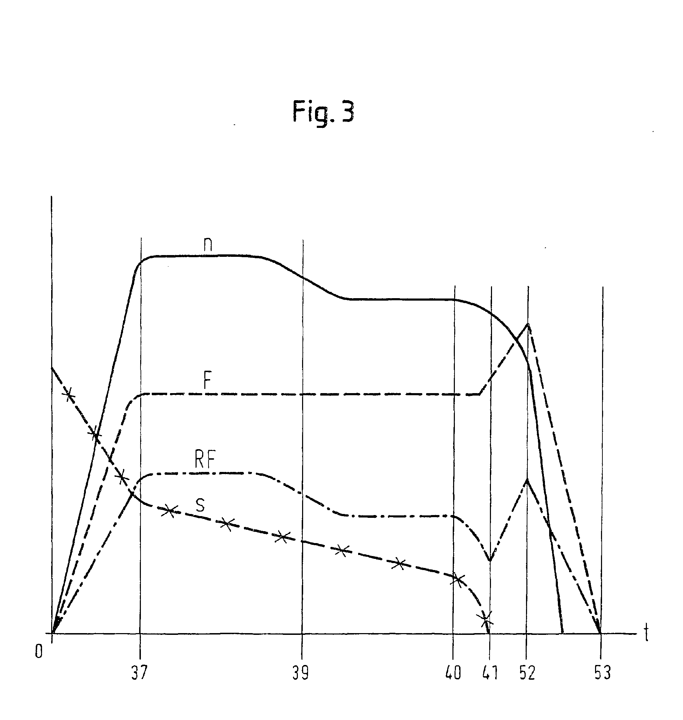

In der Figur 3 ist ein Diagramm dargestellt, das die einzelnen Messwerte angibt, die von den in der Vorrichtung enthaltenen Sensoren gemessen werden. Darin zeigt die durchgehend gezeichnete Linie die Drehzahl n an, die gestrichelt gezeichnete Linie die axiale Presskraft F, mit der der Bolzen 5 auf die Platte 3 drückt, die strichpunktierte Linie das von dem Elektromotor 7 abgegebene Drehmoment RF und die kreuzgestrichelte Linie die Bewegung s des Bolzens 5. Aus dem Diagramm ist ersichtlich, dass zunächst der Elektromotor mit seiner Drehzahl n hochgefahren wird, bis er bei der Linie 37 in den Bereich seiner Maximaldrehzahl gelangt. Gleichzeitig wird mit dem Hochfahren der Drehzahl n der Elektromotor 7 mit den ihm umgebenden Teilen auf die Platte 3 abgesenkt. Gleichzeitig steigt das Drehmoment RF an, da nämlich zum Zeitpunkt der Linie 37 der Bolzen 5 die Platte 3 erreicht hat und nunmehr der Prozess des Reibschweißens mit dem Aneinanderreiben des Bolzens 5 und die Platte 3 beginnt. Dabei bleibt zunächst die Drehzahl n im Wesentlichen gleich. Über diese Zeit des Reibens bleibt dann das Drehmoment RF und die Presskraft F im Wesentlichen bei ihrem erreichten Wert, bis durch Anschmelzen von Bolzen 5 und Platte 3 die Reibung zwischen diesen beiden Bauteilen und damit das Drehmoment RF stark abfallen (siehe Linie 39 in Figur 3), was von der Steuerung erkannt und dazu benutzt wird, um nunmehr die Drehzahl abzusenken, währenddessen die Presskraft F und das abgesenkte Drehmoment RF praktisch gleich bleiben. Dabei dringt der Bolzen 5 in die Platte 3 um etwa einige Zehntel Millimeter an, wobei sich zwischen Bolzen 5 und Platte 3 eine gewünschte Schmelze ausbildet, die dann bei Zeitpunkt 40 die Reibung zwischen den beiden Bauteilen vermindert. Dies zeigt sich an dem Abfall des Drehmomentes RF nach dem Zeitraum 40, der von dem Drehmomentsensor 17 der Steuerung 19 gemeldet wird. Von der Steuerung 19 wird daraufhin die Presskraft F mit einer durch die Steuerung 19 bedingten Zeitverzögerung erhöht, was im Bereich zwischen den Zeitpunkten 40 und 41 geschieht. Mit Erhöhung der Presskraft F steigt das Drehmoment RF wieder an, bis zum Zeitpunkt 52, zu dem die Drehzahl n weitgehend abgesenkt ist, so dass zum Zeitpunkt 52 ab von der Steuerung die Presskraft F abgesenkt wird und schließlich auf den Wert 0 zurück geht. Gleichzeitig wird einerseits durch die Verringerung der Drehzahl n und die Verringerung der Presskraft F auch das Drehmoment RF abgesenkt und erreicht ebenfalls den Wert 0, wenn auch die Drehzahl den Wert 0 erreicht hat. Zu diesem Zeitpunkt 53 ist dann der angeschmolzene Bolzen fest miteinander verschweißt.

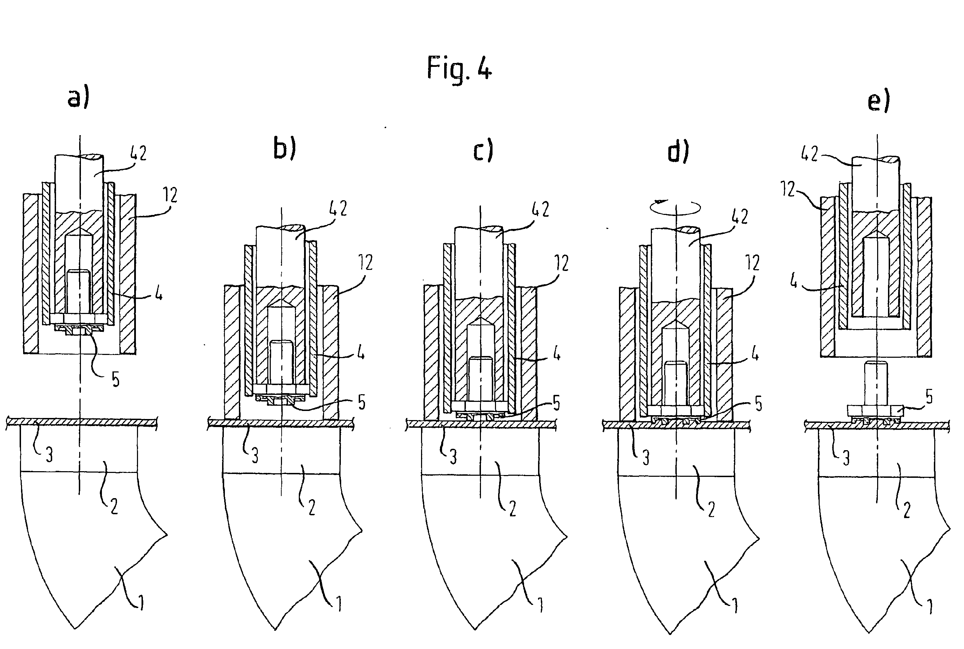

In den Figuren 4a - e sind die aufeinanderfolgenden Phasen der Herstellung einer Reibschweißverbindung dargestellt. Dabei zeigt die Figur 4a das vordere Ende der Vorrichtung gemäß Figur 1 in ihrer Anfangsstellung, in der sich das Futter 4 mit dem eingespannten Bolzen 5 in einiger Entfernung vor der Platte 3 befindet, wobei das Futter 4 mit dem Bolzen 5 von dem Niederhalter 12 umgeben ist. Der Niederhalter 12 ist dabei in einer voreilenden Lage (siehe Figur 1) gezeichnet, aus der er bei Aufsetzen auf die Platte 3 in eine Lage zurückgedrückt wird, wie sie in Figur 4c dargestellt ist. Das Futter 4 enthält außerdem den Druckbolzen 42, der als Bestandteil des Futters 4 (in den Figuren 1 und 2 nicht dargestellt) den oben erläuterten Pressdruck auf den anzuschweißenden Bolzen 5 ausübt.

Figur 4b zeigt die Anordnung gemäß Figur 4a in einer Position, in der der Niederhalter 12 auf die Platte 3 aufgesetzt ist und diese an das Widerlager 2 andrückt.

Im Anschluss an die Betriebsphase gemäß Figur 4b wird nun, wie in Figur 4c dargestellt, der Bolzen 5 von dem Futter 4 weiter in Richtung auf die Platte 3 vorgeschoben, bis der Bolzen 5 mit seinem für das Reibschweißen vorgesehenen Bereich die Platte 3 berührt, womit der Reibschweißvorgang beginnen kann. Dabei wurde der Niederhalter 12 weiter gegen die in der Figur 2 dargestellten Federn 23, 24 zurückgedrückt und übt damit eine besondere hohe Verspannkraft auf die Platte 3 in Bezug auf das Widerlager 2 aus.

Im Anschluss an die Phase gemäß Figur 4c erfolgt dann der in der Figur 3 diagrammatisch dargestellte Reibschweißvorgang durch Aktivierung des Elektromotors 7 und damit Drehung des Bolzens 5 mit der Anfangsdrehzahl, was zu der im Zusammenhang mit der Figur 3 erläuterten Reibung und dem Anschmelzen der betreffenden Berührungsflächen von Bolzen 5 und Platte 3 führt, wobei der Bolzen 5 über ein geringes Maß in die Platte 3 eindringt und am Ende des Vorganges schließlich mit der Platte 3 fest verschweißt, wie dies in der Figur 4 d dargestellt ist.

Mit Abschluss der mit der Figur 4d dargestellten Betriebsphase kann nunmehr das Futter 4 und der Niederhalter 12 von der Platte abgezogen werden, wie dies in der Figur 4e dargestellt ist. Dabei wird der Bolzen 5 von dem Futter 4 freigegeben und verbleibt fest verschweißt an der Platte 3.

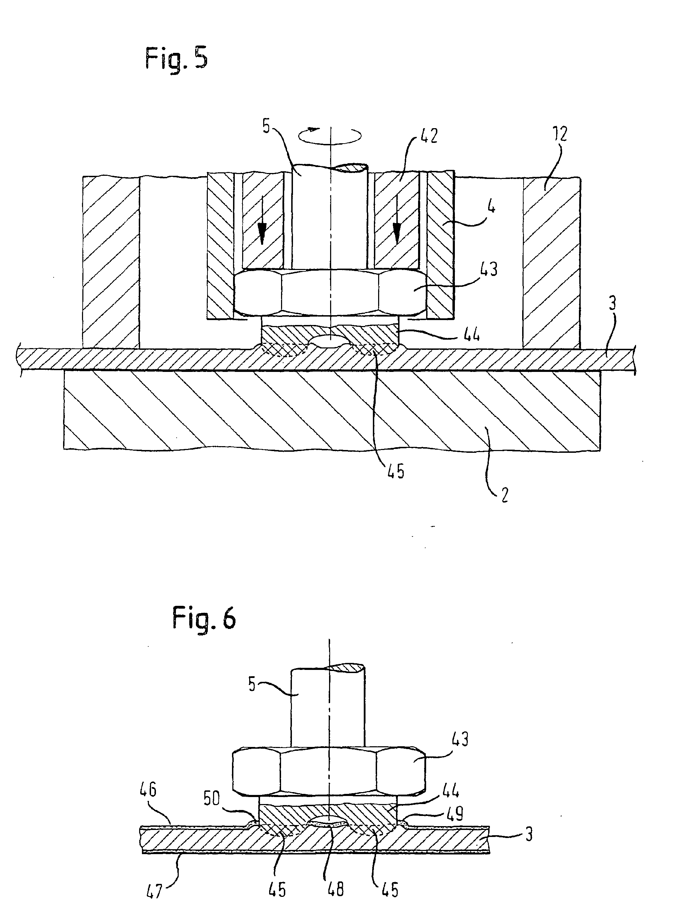

In der Figur 5, die die Vorrichtung in der Betriebsphase gemäß Figur 4 d zeigt, ist die fertige feste Reibschweißverbindung des Bolzens 5 mit der Platte 3 dargestellt. Der Bolzen 5 besteht hier aus einem Schaft mit anschließendem Sechskant 43 und dem von diesem axial wegragenden Schweißring 44. Diese drei Bestandteile sind einstückig ausgebildet. Bei dem Schweißring 44 handelt es sich um einen axial zu dem gesamten Bolzen 5 angeordneten kurzen Vorsprung, der mit seiner frontalen Fläche auf die Platte 3 zum Reibschweißen aufgesetzt wird, wobei diese frontale Fläche und die ihm zugewandte Oberfläche der Platte 3 die beiden Berührungsflächen für die Reibschweißverbindung bilden. Bei dieser Gestaltung des Bolzens 5 und der Platte 3 und der Anwendung des vorstehend beschriebenen erfindungsgemäßen Verfahrens ergibt sich eine besonders dünne Schweißzone 45, die es ermöglicht, dass das erfindungsgemäße Reibschweißverfahren auch bei besonders dünnen Platten angewendet werden kann. Derartige Platten werden vor allem im Karosseriebau der Automobilindustrie verwendet.

In der Figur 6 ist eine fertige Reibschweißverbindung eines Bolzens, wie er in der Figur 5 dargestellt ist, und einer Platte 3 dargestellt, die vor dem Reibschweißvorgang auf ihren beiden Seiten jeweils mit einer dünnen Beschichtung 46 und 47 versehen worden ist. Derartige dünne Beschichtungen werden ebenfalls im Karosseriebau verwendet, da häufig Karosseriebleche mit einer Lackbeschichtung die Grundlage einer Karosserie bilden. Wie Figur 6 zeigt, ist die Schicht 46 beim Reibschweißen durchbrochen worden, wobei sich erhitzte und geschrumpfte Teile 48, 49 und 50 aus der Beschichtung 46 bilden, die neben der Reibschweißzone 45 verblieben sind. Die Reibschweißzone 45 geht von dem Ring 44 direkt in das innere Material der Platte 3 über, womit sich eine besonders feste, porenfreie Reibschweißverbindung ergibt. Diese hat dabei noch den besonderen Vorteil, dass wegen ihrer Konzentration auf die relativ dünne Zone der Reibschweißzone 45 eine Durchwärmung der Platte 3 praktisch nicht eintritt und damit auch eine Beschädigung der auf der Rückseite der Platte 3 vorhandenen Beschichtung 47 vermieden wird.

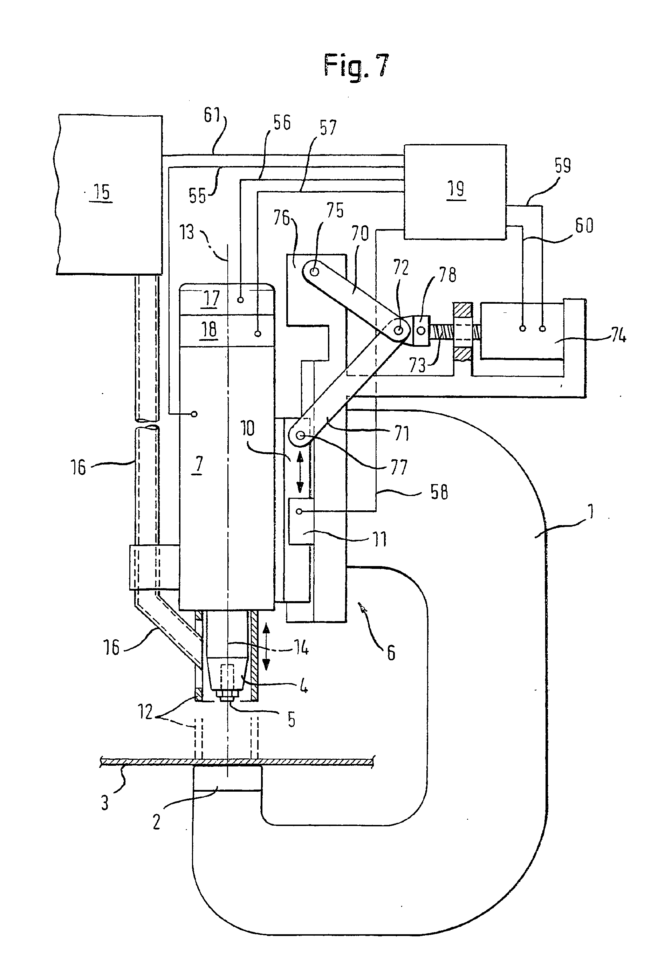

In der Figur 7 ist eine Vorrichtung zur Durchführung des erfindungsgemäßen Verfahrens dargestellt, in der ein Presskraftaktuator besonderer Art Verwendung findet. Hierzu sei zunächst auf den oben angegebenen Stand der Technik (DE 199 02 357 A1) verwiesen, gemäß dem konkret als Presskraftaktuator ein Hydraulikzylinder erwähnt und darüber hinaus darauf hingewiesen wird, dass der Presskraftaktuator auch in beliebig anderer geeigneter Weise ausgebildet sein kann. Bei dem in der Vorrichtung gemäß Figur 7 verwendeten Presskraftaktuators handelt es sich um eine Kniehebelgelenkverbindung mit den beiden Gelenkhebeln 70 und 71. Diese beiden Gelenkhebel sind in dem Gelenk 72 zusammengefasst, an das der Gewindestellstange 73 angreift. Die Gewindestellstange 73 wird durch den Stellmotor 74 betätigt. Das dem Gelenk 72 abgewandte Gelenk 75 ist an dem oberen Endteil 76 der Vorschubeinrichtung 6 angelenkt. Diese obere Endteil 76 ist stationär verankert, so dass sich der Gelenkhebel 70 gegen das obere Endteil 76 abstützen kann. Das Gelenk 77 des Gelenkhebels 71 ist an das Schiebeteil 10 angelenkt, so dass ein von dem Gelenkhebel 71 auf das Schiebeteil 10 ausgeübter Druck bzw. Zug das Schiebeteil 10 entsprechend den eingezeichneten Pfeilen verschiebt.

Dieser Kniehebelgelenkverbindung liegt folgende Funktion zugrunde: Bei Verdrehung und damit Verschiebung der Gewindestellstange 73 in Richtung auf die Vorschubeinrichtung 6 entfernen sich die beiden Gelenke 75 und 77 voneinander, wobei wegen der stationären Lage des oberen Endteils 76 das Gelenk 77 sich nach unten, also in Richtung auf das Bauteil 3 zu zwangsläufig verschiebt. Dabei kann je nach dem von den beiden Gelenkhebeln 70 und 71 eingeschlossenen Winkel ein mehr oder minder starker Druck auf das Schiebeteil 10 ausgeübt werden. Um dabei eine notwendige Kreisbewegung des Gelenkhebels 70 um das einen Mittelpunkt für die Drehbewegung bildende Gelenk 75 zu ermöglichen, ist in die Gewindestellstange 73 ein entsprechend wirkendes Drehgelenk 78 eingebaut.

Die Steuerung der Vorrichtung erfolgt prinzipiell in gleicher Weise wie dies im Zusammenhang mit der Figur 1 erläutert ist. Dabei sind lediglich die beiden Leitungen 59 und 60 an den Stellmotor 74 angeschlossen.

Mit der Kniehebelgelenkverbindung mit den beiden Gelenkhebeln 70 und 71 lässt sich eine sehr genaue Verschiebung des Schiebeteils 10 ermöglichen, wobei gleichzeitig auf das Schiebeteil 10 auch hohe Kräfte ausgeübt werden können, so dass die Kniehebelgelenkverbindung eine besonders vorteilhafte Gestaltung derjenigen Teile der Vorrichtung bildet, die für die Vorschubbewegung des Futters 4 mit dem Bolzen 5 verantwortlich sind.

Versuche haben gezeigt, dass das vorstehend erläuterte erfindungsgemäße Verfahren unter Anwendung der nachstehend angegebenen Prozesswerte durchgeführt werden kann:
Anfangsdrehzahl n = 10.000 U/min.;
Drehmoment RF = 20-40 N/m;
Presskraft F = 3-10 KN;
Wegstrecke s des angetriebenen Bauteils während des Aneinanderreibens der Bauteile s = 0,4-0,8 mm;
Zeitspanne für das Aneinanderreiben der Bauteile t = 0,5-5 sek..

Bei den vorstehend angegebenen Prozesswerten handelt es sich um ein Beispiel. Diese Werte können in Abhängigkeit von den Materialien der Bauteile und der Größe von deren Reibflächen variieren. Auf jeden Fall handelt es sich um ein Reibschweißverfahren von besonders kurzer Dauer, das sich darüber hinaus dadurch auszeichnet, dass es einerseits bei dem angetriebenen Bauteil nur eine geringfügige Verkürzung und bei dem Bauteil eine sehr geringe Eindringtiefe erfordert.

## Patentansprüche

1. Verfahren zum Reibschweißen von Bauteilen (3, 5), bei dem die beiden Bauteile (3,4) während einer Erwärmungsphase unter gegenseitiger, von einem Presskraftaktuator (8a) erzeugten axialen Presskraft F an der zu verschweißenden Stelle bei Stillstand eines stationären Bauteils (3) und Drehung des angetriebenen Bauteils (5) relativ zueinander gedreht werden, bei dem ferner nach ausreichender Reibungserwärmung der Bauteile (3,5) die Drehung abgebremst wird und die zueinander still stehenden Bauteile (3,5) mit wesentlich erhöhter Presskraft als während der Erwärmungsphase zusammengepresst werden, wobei das gedreht Bauteil (5) von einem mit einer Steuerung (19) versehenen Elektromotor (7) angetrieben wird, dessen Drehzahl (n), Drehmoment (RF), Presskraft (F) und Vorschubtiefe (s) von der Steuerung (19) gemessen wird, **dadurch gekennzeichnet, dass** die Drehzahl (n) in Abhängigkeit von einer axialen Anfangspresskraft (F) zwischen den beiden Bauteilen (3, 5) durch die Steuerung (19) auf eine das Anschmelzen der Berührungsflächen der beiden Bauteile (3, 5) bewirkende Anfangsdrehzahl (n) eingestellt und bis zu einem infolge Schmelzens der Berührungsflächen der beiden Bauteile (3, 5) eintretenden Drehmomentabfall beibehalten wird, bei dem die Drehzahl verringert und bis zum Stillstand abgesenkt wird, wobei am Ende der Absenkung die Presskraft (F) bis zu einem Maximum so erhöht wird, dass an den Berührungsflächen der beiden Bauteile (3, 5) die feste Verschweißung (45) erfolgt.

2. Vorrichtung zur Durchführung des Verfahrens nach Anspruch 1, **dadurch gekennzeichnet, dass** der Elektromotor (7) von einer den Presskraftaktuator (8a) aufweisenden linearen Vorschubeinrichtung (6) getragen wird und mit einem Presskraftsensor (17) versehen ist und die Verbindung von Elektromotor (7) und Vorschubeinrichtung (6) mit einem Wegsensor (11) versehen ist, wobei der Elektromotor (7), der Wegsensor (11), der Drehmomentsensor (18) und der Presskraftsensor (17) in einen die Steuerung (19) enthaltenden Regelkreis eingeschaltet sind und mit ihren das Drehmoment (RF), die Drehzahl (n), die Wegstrecke (s) und die Presskraft (F) angebenden Messdaten die Steuerung (19) derart speisen, dass die Anfangsdrehzahl das Anschmelzen der Berührungsflächen der beiden Bauteile (3, 5) bewirkt und bis zu einem infolge Schmelzen der Berührungsflächen der beiden Bauteile (3, 5) beibehalten und durch den eintretenden Drehmomentabfall die Drehzahl verringert und unter Erhöhung der Presskraft (F) bis zum Stillstand abgesenkt wird.

3. Vorrichtung nach Anspruch 2 **gekennzeichnet durch** eine Aufnahme (4) für das angetriebene Bauteil bildende Bolzen (5) und ein Widerlager (2) für plattenförmige Bauteile (3) als stationäres Bauteil.

4. Vorrichtung nach Anspruch 3, **dadurch gekennzeichnet, dass** das Widerlager (2) eine ebene Oberfläche aufweist.

5. Vorrichtung nach Anspruch 3 oder 4, **gekennzeichnet durch** einen Niederhalter (12), der das plattenförmige Bauteil (3) gegen das Widerlager (2) drückt.

6. Vorrichtung nach einem der Ansprüche 2 bis 5, **gekennzeichnet durch** eine Zuführvorrichtung (15) für die Zuführung der Bolzen (5).

7. Vorrichtung nach einem der Ansprüche 3 bis 6, **dadurch gekennzeichnet, dass** das Widerlager (2) über einen C-förmig gestalteten Arm (1) mit der Vorschubeinrichtung (6) verbunden ist.

8. Vorrichtung nach Anspruch 2, **dadurch gekennzeichnet, dass** der Presskraftaktuator als Kniehebelgelenkverbindung ausgebildet ist, deren Gelenkhebel (70, 71) von einer Gewindestellstange (73) bei motorisch angetriebener Drehung sich entweder annähern oder voneinander entfernen.

## Claims

1. Process for the friction-welding of components (3, 5) in which, during a heating phase and under reciprocal axial pressing force F produced by a pressing-force actuator (8a), the two components (3, 4) are rotated in relation to each other at the site to be welded, one component (3) being stationary and the driven component (5) being rotated, wherein, furthermore, after sufficient friction heating of the components (3, 5), the rotation is braked and the components (3, 5), stationary with respect to each other, are pressed together with considerably greater pressing force than during the heating phase, the rotated component (5) being driven by an electric motor (7) provided with a controller (19), the speed (n), torque (RF), pressing force (F) and feed depth (s) of said electric motor (7) being measured by the controller (19), **characterized in that**, depending on an axial initial pressing force (F) between the two components (3, 5), the speed (n) is adjusted by the controller (19) to an initial speed (n) causing the part-melting of the contact surfaces of the two components (3, 5) and is maintained up until a torque drop occurring as a consequence of melting of the contact surfaces of the two components (3, 5), upon which torque drop the speed is lowered and reduced down to a standstill, wherein, at the end of reduction, the pressing force (F) is increased up to a maximum so that the strong welded connection (45) is achieved at the contact surfaces of the two components (3, 5).

2. Device for implementing the process according to claim 1, **characterized in that** the electric motor (7) is carried by a linear feed apparatus (6), said feed apparatus (6) having the pressing-force actuator (8a), and is provided with a pressing-force sensor (17), and that the connection of electric motor (7) and feed apparatus (6) is provided with a travel sensor (11), wherein the torque sensor (18) and the pressing-force sensor (17) are connected into a control loop containing the controller (19) and supply the controller (19) with their measured data indicating the torque (RF), speed (n), travel (s) and pressing force (F) such that the initial speed (n) causes the part-melting of the contact surfaces of the two components (3, 5) and is maintained until melting of the contact surfaces of the two components (3, 5), and the speed is lowered by means of the torque drop and is reduced down to a standstill while increasing the pressing force (F).

3. Device according to claim 2, **characterized by** a receiving means (4) for the stud (5) forming the driven component and by an abutment (2) for panel-type components (3) as the stationary component.

4. Device according to claim 3, **characterized in that** the abutment (2) has a flat surface.

5. Device according to claim 3 or 4, **characterized by** a downholder (12), said downholder (12) pressing the panel-type component (3) against the abutment (2).

6. Device according to any of the claims 2 to 5, **characterized in that** a feeding device (15) is provided for feeding the studs (5).

7. 13. Device according to any of the claims 3 to 6, **characterized in that** the abutment (2) is connected to the feed apparatus (6) by a C-shaped arm (1).

8. Device according to claim 2, **characterized in that** the pressing-force actuator is in the form of a toggle joint connection, the articulated levers (70, 71) of which toggle joint connection move either towards or away from each other by a threaded adjusting rod (73) during motor-driven rotation.

## Revendications

1. Procédé de soudage par friction d'éléments constitutifs (3, 5) lors duquel les deux éléments constitutifs (3, 4), pendant une phase de réchauffement sous force de compression F axiale réciproque, produite par un actuateur de force de compression (8a) sur le point à souder lors de l'arrêt d'un élément constitutif stationnaire (3) et rotation de l'élément constitutif entraîné (5), sont tournés l'un par rapport à l'autre, lors duquel de plus après un réchauffement suffisant par friction des éléments constitutifs (3, 5) la rotation est ralentie et les éléments constitutifs (3, 5) se trouvant immobiles l'un par rapport à l'autre sont comprimés avec une force de compression essentiellement plus élevée que durant la phase de réchauffement, sachant que l'élément constitutif tourné (5) est entraîné par un électromoteur (7) pourvu d'une commande (19), dont la vitesse de rotation (n), le couple de rotation (RF), la force de compression (F) et la profondeur d'avance (s) est mesuré par la commande (19), **caractérisé en ce que** la vitesse de rotation (n) est réglée en fonction d'une force de compression initiale axiale (F) entre les deux éléments constitutifs (3, 5) par la commande (19) sur une vitesse de rotation initiale (n) provoquant la fonte des surface de contact des deux éléments constitutifs (3, 5) et est conservée jusqu'à une diminution du couple de rotation apparaissant à la suite de la fonte des surfaces de contact des deux éléments constitutifs (3, 5), lors duquel la vitesse de rotation est réduite et diminuée jusqu'à l'arrêt, sachant qu'à la fin de la baisse, la force de compression (F) est élevée jusqu'à un maximum de telle manière que la soudure solide (45) se réalise sur les surfaces de contact des deux éléments constitutifs (3, 5).

2. Dispositif pour l'exécution du procédé selon revendication 1, **caractérisé en ce que** l'électromoteur (7) est porté par un dispositif d'avance (6) linéaire présentant l'actuateur de force de compression (8a) et est équipé d'un capteur de force de compression (17) et la connexion de l'électromoteur (7), et du dispositif d'avance (6) est muni d'une capteur de déplacement (11), sachant que l'électromoteur (7), le capteur de déplacement (11), le capteur de couple de rotation (18) et le capteur de force de compression (17) sont activés dans un circuit de réglage contenant la commande (19) et avec leurs données de mesure indiquant le couple de rotation (RF), la vitesse de rotation (n), le parcours (s) et la force de compression (F), alimentent la commande de telle manière que la vitesse de rotation initiale provoque la fonte des surface de contact des deux éléments constitutifs (3, 5) et est maintenue jusqu'à la fonte des surfaces de contact des deux éléments constitutifs (3, 5) et par une chute du couple de rotation se produisant la vitesse de rotation est réduite et est diminuée sous l'élévation de la force de compression (F) jusqu'à l'arrêt.

3. Dispositif selon revendication 2, **caractérisé par** une entrée (4) pour l'élément constitutif entraîné formant un goujon (5) et une butée (2) pour des éléments constitutifs (3) en plate-forme en tant qu'élément constitutif stationnaire.

4. Dispositif selon revendication 3, **caractérisé en ce que** la butée (2) présente une superficie plane.

5. Dispositif selon revendication 3 ou 4, **caractérisé par** un serre-flan (12) qui presse l'élément constitutif en plate-forme (3) contre la butée (2).

6. Dispositif selon l'une des revendications 2 à 5, **caractérisé par** un dispositif d'alimentation (15) pour l'amenée des goujons (5).

7. Dispositif selon l'une des revendications 3 à 6 **caractérisé en ce que** la butée (2) est reliée avec le dispositif d'avance (7) par un bras (1) réalisé en forme de C.

8. Dispositif selon revendication 2, **caractérisé en ce que** l'actuateur de force de compression est formé en tant que liaison articulée de levier coudé, dont les leviers articulés (70, 71) soit se rapprochent d'une tige de réglage filetée (73) ou s'éloignent les uns des autres avec une rotation entraînée par moteur.
